# EUROPÄISCHE PATENTSCHRIFT

(11) **EP 1 040 623 B1**
(45) Veröffentlichungstag und Bekanntmachung des Hinweises auf die Patenterteilung: **19.02.2003**
(21) Anmeldenummer: 98966178.0
(22) Anmeldetag: 30.11.1998
(51) Int. Cl.: H04L 12/413

(54) **VERFAHREN ZUR KOORDINATION VON NETZWERKKOMPONENTEN**
METHOD FOR COORDINATING NETWORK COMPONENTS
PROCEDE DE COORDINATION DE COMPOSANTS DE RESEAU

(30) Priorität: 09.12.1997 DE 19754640
(43) Veröffentlichungstag der Anmeldung: 04.10.2000
(73) Patentinhaber: ROBERT BOSCH GMBH, 70442 Stuttgart (DE)
(72) Erfinder: RODE, Detlef, D-30966 Hemmingen (DE); ZURMUEHL, Uwe, D-31180 Giesen (DE)
(86) Internationale Anmeldenummer: DE9803517
(87) Internationale Veröffentlichungsnummer: WO99030459

(56) Entgegenhaltungen:
- EP-A- 0 399 491
- WO-A-97/36183
- DE-A- 19 637 312
- US-A- 5 592 675

## Beschreibung

### STAND DER TECHNIK

Die vorliegende Erfindung betrifft ein Verfahren zur Koordination gemäß dem Oberbegriff des Anspruches 1, wie aus der EP-A-0 399 491 bekannt.

Die Erfindung ist für weite Bereiche der Kommunikationstechnik anwendbar, sie wird jedoch beispielshalber nur in bezug auf ein CAN-Netzwerksystem bei Anwendung im KFZ-Bereich näher erläutert.

Bei solchen, in einem KFZ installierten Systemen ergibt sich oftmals die Situation, daß nur einzelne Komponenten des Netzwerksystems nach einem Fehlerfall einen Neustart, d.h. Reset, durchführen. Ein typischer Auslöser für einen solchen Reset ist die Erkennung einer Unterspannungsbedingung, die von Komponente zu Komponente variieren kann.

Hieraus resultiert das grundsätzliche Problem, spezielle Kommunikationsmechanismen zwischen den Komponenten zu definieren, um möglichst schnell ein Wiederaufsetzen der verteilten Applikationen zu erreichen. Hierbei ist es im allgemeinen vorteilhaft, den Zustand des Gesamtsystems vor dem Reset - soweit möglich - wieder zu reproduzieren bzw. abzustimmen. Von besonderer Bedeutung ist dies für Systeme mit Benutzerinteraktion, beispielsweise über ein Anzeige- und Bedienteil, um durch Resets ausgelöste Störungen im Bedienablauf, wie etwa nicht mehr aktuelle Darstellungen auf einem Display, Zeitverzögerungen bei der Bedienung von Komponenten, verlorengegangene Eingaben etc. zu minimieren.

Die der vorliegenden Erfindung zugrunde liegende Problematik besteht also allgemein darin, in einem Netzwerk mit verteilten Applikationen die den Applikationen entsprechenden Netzwerkkomponenten auf effektive Weise zu koordinieren. Dies gilt insbesondere für einen Neustart nach einem Fehlerfall von einzelnen Komponenten.

Generell müssen die folgenden vier Fälle erkannt und angemessen behandelt werden.
i) "Normales" Hochfahren aller Komponenten (Systemstart),
ii) zeitgleicher Fehler aller Komponenten nach Systemstart, z. B. durch Unterspannung für alle Komponenten im Netzwerk,
iii) Fehler eines Teilsystems nach Systemstart, d. h. Fehlerbedingung einer oder mehrerer Komponenten, und
iv) Hardware-Reset nach erstmaligem Einschalten (First Power-On) oder fatalem Fehler.

Zunächst wird die spezielle Problematik einer gegenseitigen Koordination bzw. Synchronisation von verteilten Applikationen und deren diesen entsprechenden logischen Komponenten näher erläutert.

In Systemen, in denen Komponenten miteinander über ein Netzwerk, beispielsweise ein Bussystem, kommunizieren, ist eine gewisse Grundvoraussetzung für das hier beschriebene Verfahren eine Trennung von Kommunikation und Applikation innerhalb einer Komponente (s. ISO 7498, Information processing systems - Open systems Interconnection Basic Reference Model, 1984).

Betrachtet werden hier Systeme, die über ein Netzwerk, z.B. ein Bussystem, kommunizieren, wobei Kommunikation und Applikation folgendermaßen definiert sind.

Unter die Kommunikation fallen alle Funktionen, die zum gesicherten Datenaustausch mit anderen Komponenten benötigt werden. Typischerweise findet eine aus dem OSI-Modell der ISO (s.o.) abgeleitete Schichtung der Kommunikation Verwendung, d. h. eine Umsetzung von der physikalischen Schicht bis zur Applikationsschnittstelle. Den Anforderungen dieses Verwendungsgebietes angepaßt wird für den KFZ-Bereich in den gängigen Lösungen nur eine Untermenge des OSI-Modells eingesetzt, d.h. einige Schichten bleiben "leer". Weiterhin wird in Erweiterung des OSI-Modells üblicherweise ein die verschiedenen Schichten umfassendes Netzmanagement eingesetzt, welches die unterschiedlichen Komponenten hinsichtlich der Kommunikation synchronisiert.

Unter Applikation wird die spezifische Aufgabe jeder Komponente verstanden, z. B. die Funktionalität eines CD-Spielers oder die verschiedenen Funktionen eines Autotelefons.

In Systemen, die über logische Punkt-zu-Punkt(1:1)-Verbindungen zwischen den einzelnen Komponenten verfügen, werden über eine solche Verbindung die "Kommandos" der Applikation einer Komponente A an die Komponente B weitergeleitet, die diese dann z. B. mit einer Applikations-Rückmeldung beantwortet. Ein Beispiel ist die Aktivierung eines CD-Changers zum Spielen durch ein Bedienteil.

Zweckmäßigerweise werden diese 1:1 Verbindungen der Applikationsebene auf die 1:1 Verbindungen der Transportschicht (Schicht 4 im OSI-Modell) abgebildet. Während die 1:1-Transportverbindungen von beiden beteiligten Komponenten aufgebaut bzw. im Fehlerfall zurückgesetzt werden können, was einem symmetrischen Verhalten entspricht, gilt dies nicht für die Applikationsebene. Hier ist beispielsweise nur eine Komponente A - der "Master" - berechtigt, eine Komponente B - den "Slave" - zu steuern.

Insbesondere trifft dies für das Schalten der Hauptzustände des Slaves zu, wie z. B. "EIN" und "AUS".

Zweckmäßigerweise liegt einem solchen System ein Netzmanagement zugrunde, das ebenfalls zwischen Master- und Slave-Funktionalität unterscheidet. In diesem Fall ist normalerweise ein "Applikations-Master" auch gleichzeitig ein "Netzmanagement-Master". Daneben sind allerdings auch durchaus Systeme denkbar, die beim Netzmanagement nur gleichberechtigte Stationen kennen, bei denen demnach die Master-/Slave-Unterscheidung auf die Applikationsebene beschränkt ist. Ein typisches Beispiel für letztgenanntes Netzmanagement-Verfahren ist unter dem Namen "dezentrales Netzmanagement" auf CAN-Netzen im Karosseriebereich der KFZ-Industrie zu finden.

Sofern nicht ausdrücklich anders aufgeführt, bezieht sich daher im folgenden die Bezeichnung "Master" bzw. "Slave" immer auf die Applikationsebene.

Ein relativ einfaches System besteht demnach aus einem Master und einem oder mehreren Slaves, mit jeweils einer 1:1 Verbindung zwischen Master und jedem Slave. Allerdings können auch komplexere Systeme, bestehend aus mehreren Masterkomponenten mit denselben oder auch unterschiedlichen Slaves, gebildet werden. Voraussetzung ist hierbei nur, daß für jede logische Verbindung eindeutig festgelegt ist, welche Komponente Master und welche Slave ist. Auf diese Weise läßt sich dann ein hierarchisches System aus Master, Submaster(s) und Slaves bilden, wie in der älteren Anmeldung DE 196 373 12 beschrieben.

Üblicherweise ist für eine Koordination der netzweiten Applikationen in erster Linie der Master verantwortlich. Für den Slave reicht es aus, den Reset eines Masters beispielsweise über einen Netzmanagementdienst zu erkennen.

Dies führt beispielsweise beim Slave zum Einleiten bestimmter Notlauffunktionen oder auch zum selbständigen Herunterfahren.

Der Master erkennt den Reset einer Slave-Komponente entweder durch zyklisches Abfragen des Slave-Status oder durch einen erneuten Kommunikationsaufbau, eingeleitet durch den Slave (z.B. Kommunikationssystem mit Netzmanagement und Transportprotokoll nach den älteren Anmeldungen DE 41 31 133 bzw. DE 196 373 12).

Als nachteilhaft bei dem obigen bekannten Ansatz hat sich die Tatsache herausgestellt, daß das zyklische Abfragen des Slave-Status durch den Master aufwendig und kommunikationsintensiv ist, da meist keine Änderung des Status vorliegt. Des weiteren ist dieser Abfragemechanismus inflexibel, da im allgemeinen nur bereits installierte Komponenten abgefragt werden.

Schließlich bringt ein erneuter Kommunikationsaufbau durch den Slave als Alternative zu dem obigen zyklischen Abfragemechanismus den Nachteil mit sich, daß der Master außer der Information; daß die Kommunikation wieder zustandegekommen ist, keine Mitteilungen über die Ursache des Resets und/oder dessen Vorgeschichte, nämlich beispielsweise den vorherigen Applikationsstatus erhält.

Die Art des eigenen Resets kann vom Master erkannt werden, z.B. durch Eintrag von eigenen Statusinformationen in einen nichtflüchtigen Speicher, wie beispielsweise einem EEPROM, und durch Auswertung des Eintrags bei einem nachfolgenden Neustart.

Findet der Master z.B. den Eintrag "System gestartet und in Normalbetrieb" nach einem Reset vor, so kann er auf einen Neustart durch eine Fehlerbedingung schließen. Ist dagegen "System heruntergefahren" eingetragen, so handelt es sich um ein normales Hochfahren. Problematisch ist im Fehlerfall die begrenzte Speichermöglichkeit im Master.

Im allgemeinen kann nur der eigene Status gesichert werden, da für die Zustandsspeicherung aller angeschlossener Slaves die Zeit und/oder die Speicherkapazität normalerweise nicht ausreicht. Darüber hinaus ist ein Rückgriff auf beispielsweise in einem EEPROM abgespeicherte Statusinformationen über den Slave speziell beim Fehler-Reset des Masters risikoreich, da ja auch der Slave einen Reset durchgeführt haben könnte und damit der gespeicherte Slave-Zustand vom aktuellen Zustand abweicht.

Da in den obigen Standardlösungen keine detaillierten bzw. gesicherten Status-Informationen über den Slave vorliegen, wird der Master im allgemeinen die Slave-Applikation neu starten, bzw. initialisieren.

Da hierdurch im allgemeinen vorherige Einstellungen zurückgesetzt werden müssen, bedeutet dies den Verlust des Wissens um die Vorgeschichte des Slaves, d.h. der ursprüngliche Betriebszustand oder Status der Applikation ist nicht mehr ableitbar. Aus dem Neustart der Slave-Applikation resultieren im allgemeinen merkliche Verzögerungen.

### VORTEILE DER ERFINDUNG

Das erfindungsgemäße Verfahren mit den Merkmalen des Anspruchs 1 weist gegenüber dem bekannten Lösungsansatz den Vorteil auf, daß es den alten Applikationszustand (Applikationsstatus), beispielsweise eines Slaves, vor Auftreten eines Fehlers an beliebiger Stelle im Netzwerk effizient wiederherstellen kann.

Dadurch wird es beispielsweise ermöglicht, gegebenenfalls nur lokal an dem betroffenen Slave einen Reset durchzuführen, der von dem Benutzer des Systems -beispielsweise einem Autofahrer - nicht wahrgenommen wird, da ein globales Reset ausbleiben kann.

Durch das gezielte Wieder-Aufsetzen eines kurzzeitig ausgefallenen Slaves ergibt sich im allgemeinen ein Zeitvorteil gegenüber üblichen Lösungen, bei denen alle laufenden Applikationen neu initialisiert werden müssen. Weiter ergeben sich zusätzliche Möglichkeiten für eine netzweite Diagnose.

Gemäß der Erfindung ist durch die Übermittlung der Vorgeschichte, vorzugsweise in Verbindung mit einer Netzwerkzustandstabelle in dem Master, auch ein sicheres Erkennen von neuen Komponenten im Netz ohne großen Konfigurationsaufwand für den Master möglich. Da in der erfindungsgemäßen Informationsnachricht, die im folgenden auch als Start-up-Info bezeichnet wird, zweckmäßigerweise mitgeteilt wird, ob eine Komponente zum ersten Mal am Netzbetrieb teilnimmt, kann der Master entsprechend reagieren, z.B. durch das Freischalten von neuen Bedienmenüs.

Auch ermöglicht das erfindungsgemäße Verfahren die Verriegelung von Applikationen in bestimmten Zuständen, falls mehr als ein Master auf einen Slave zugreift. Dies gilt insbesondere für den Fall, daß ein Master den Slave in einen Diagnosemodus gebracht hat. In diesem Fall ist der Slave im allgemeinen nicht mehr von einem weiteren Master steuerbar. Dies ist für diesen Master ebenfalls aus der Start-up-Info z.B. nach einem Reset unmittelbar ersichtlich. Die Start-up-Info ist daneben grundsätzlich für die Übermittlung von sogenannten Semaphoren, die wichtig für die Synchronisation von verteilten Applikationen bzw. von Prozessen im DV-technischen Sinne sind, geeignet.

Die der vorliegenden Erfindung zugrundeliegende Idee besteht darin, das Wiederaufsetzen bzw. Konfigurieren auf Applikationsebene durch den bzw. die Master unter Berücksichtigung des aktuell gemeldeten Applikationsstatus durchzuführen, indem der bzw. die Slaves ihren aktuellen Status in einem Speicher sichern, nach einer Änderung jeweils wieder aktualisieren und nach bestimmten Ereignissen, beispielsweise einem Fehler in der Sphäre des Slaves, eine Start-up-Info an den Master senden.

Hierbei wird als Auslöser letzterer Nachricht der erfolgreiche Aufbau der 1:1-Verbindung zwischen Master und Slave verwendet. Als vom Master ausgehende Trigger für diesen Verbindungsaufbau können wiederum zum einen bestimmte Netzmanagement-Mechanismen wie bestimmte Netzmanagement-Telegramme, im folgenden auch als Watchdog-Telegramme bezeichnet, oder aber auch z.B. eine vom Master gesteuerte Schaltleitung Verwendung finden.

Weiterhin kann dieser Trigger auch im Slave begründet liegen. Ein typisches Beispiel bildet das Aufwecken eines Netzwerks durch eine Telefonkomponente. In diesem Fall geht die Initiative zum Verbindungsaufbau allein vom Slave aus.

In den Unteransprüchen finden sich vorteilhafte Weiterbildungen und Verbesserungen des in Anspruch 1 angegebenen Verfahrens.

Gemäß einer bevorzugten Weiterbildung werden die Informationen der übermittelten Informationsnachricht in der ersten logischen Komponente in dem nicht-flüchtigen Speicher gespeichert.

Gemäß einer weiteren bevorzugten Weiterbildung verwendet die erste logische Komponente die Informationen der übermittelten Informationsnachricht zur Rekonstruktion des Zustands vor dem Aufbauen der Kommunikationsverbindung.

Gemäß einer weiteren bevorzugten Weiterbildung wird die Informationsnachricht nach einem Reset bei bereits gestarteter Applikation mindestens einer der ersten oder der zweiten logischen Komponente übermittelt.

Besonders bevorzugte Anwendungen des erfindungsgemäßen Verfahrens liegen in Meß- und/oder Überwachungssystemen, in KFZ-Boardinformationssystemen und in netzwerkweiter Fehlerortung und/oder Fehlerdiagnose von Netzwerkkomponenten solcher Systeme.

### ZEICHNUNGEN

Ausführungsbeispiele der Erfindung sind in den Zeichnungen dargestellt und in der nachfolgenden Beschreibung näher erläutert.

Es zeigen:
- Fig. 1: eine schematische Darstellung der gemäß einer ersten Ausführungsform am erfindungsgemäßen Verfahren beteiligten Netzwerkkomponenten, nämlich einen Master, der mit einem Slave verbunden ist.
- Fig. 2: den zeitlichen Verlauf des erfindungsgemäßen Verfahrens gemäß der ersten Ausführungsform zeitlich von oben nach unten fortschreitend bei einem Reset des Slaves in Folge einer Unterspannung.

### BESCHREIBUNG DER AUSFÜHRUNGSBEISPIELE

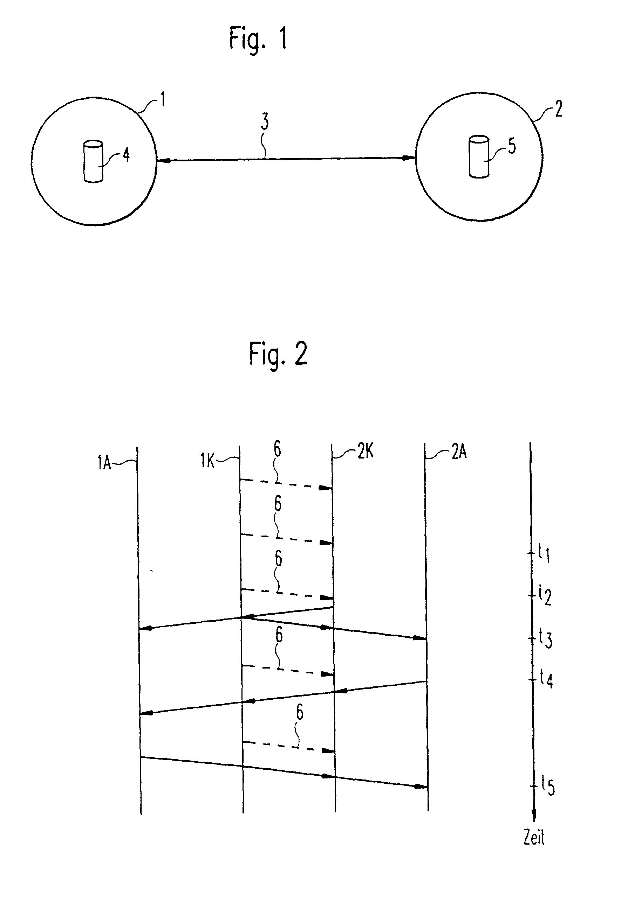

Fig. 1 zeigt eine schematische Darstellung der gemäß einer ersten Ausführungsform am erfindungsgemäßen Verfahren beteiligten Netzwerkkomponenten, nämlich einen Master, der mit einem Slave verbunden ist.

In Fig. 1 bezeichnet Bezugszeichen 1 ein Radio, 2 einen CD-Changer, 3 eine Kommunikationsverbindung zwischen dem Radio 1 und dem CD-Changer 2 sowie 4 und 5 jeweils nichtflüchtige Speicher.

Das relativ einfache System enthält das Radio 1 als Master und den angeschlossenen CD-Changer 2 als Slave des Radios 1 und eine die beiden Netzwerkkomponenten 1, 2 miteinander verbindende Kommunikationsverbindung 3 in Form einer Busleitung. Weiter verfügen sowohl das Radio 1 als auch der CD-Changer 2 über nichtflüchtige, Speicher 4 bzw. 5, die beispielsweise in Form von gepufferten SRAMs oder EEPROMs realisiert sein könnten. Die Speicher 4, 5 dienen der Speicherung von Daten, deren Auswertung durch den Master 1 zur Koordination der Netzwerkkomponenten 1, 2 dienen.

Figur 2 zeigt schematisch den zeitlichen Verlauf des erfindungsgemäßen Verfahrens gemäß der ersten Ausführungsform zeitlich von oben nach unten fortschreitend bei einem Reset des Slaves in Folge einer Unterspannung.

In Fig. 2 bezeichnet 6 ein Watchdog-Telegramm, d.h. eine Aufforderung des Radios 1 an den CD-Changer 2, eine Kommunikation aufzubauen bzw. aufrechtzuerhalten.

Die linke äußere Linie stellt die Applikationsschnittstelle 1A des Radios 1 dar, die zweite Linie von links die Kommunikationsschnittstelle 1K des Radios 1 , die dritte Linie von links die Kommunikationsschnittstelle 2K des CD-Changers 2 und die rechte äußere Linie die Applikationsschnittstelle 2A des CD-Changers 2.

Anfangs und in der Figur oberhalb von t₁ ist das System initialisiert und beide Komponenten, das Radio 1 und der CD-Changer 2, sind in Betrieb. Im CD-Changer 2 ist dessen Status, beispielsweise "PLAY", in dem nichtflüchtigen Speicher 5 gespeichert. Vom Radio 1 werden zyklisch Watchdog-Telegramme 6 an den CD-Changer 2 gesendet.

Zum Zeitpunkt t₁ selbst tritt eine Betriebsstörung, hier eine Unterspannung im CD-Changer 2 auf, die einen Reset des CD-Changers 2 nötig macht. Sobald diese Unterspannung als solche erkannt ist, werden neben dem bereits gespeicherten gegenwärtigen Applikationszustand "PLAY" des CD-Changers 2 erwünschte weitere Informationen über seine Vorgeschichte, z.B. "Fehler im Slave" sowie die letzte Position des CD-Abtastsystems, in seinem nicht-flüchtigen Speicher 5 gespeichert.

Dazu sei ergänzend erläutert, daß bei Auftreten einer Unterspannung bei einer Komponente die Versorgungsspannung i.a. nicht auf Null Volt heruntergeht. Grund dafür ist eine Pufferung der Versorgungsspannung. Bei leichten Unterspannungen können bestimmte Maßnahmen zur Sicherung aktueller Daten in den nicht-flüchtigen Speicher (soweit vorhanden) eingeleitet werden. Damit verbunden sind normalerweise ein Zurücksetzen der Applikation und/oder der Kommunikation (z.B. Abbau logischer Verbindungen). Steigt die Spannung wieder an, so müssen Applikation sowie ggfs. Kommunikation neu initialisiert werden ("Warmstart").

Dabei bedeutet Initialisierung der Applikation eine Vorbereitung der Applikation und ggfs. einen Start der Applikation (i.a. kein selbständiger Applikationsstart bei einem Slave). Initialisierung der Kommunikation bedeutet das Treffen von Vorbereitungen für die Kommunikation mit anderen Netzwerkkomponenten, z.B. einen Verbindungsaufbau.

Erst wenn die Versorgungsspannung unter einen kritischen Wert sinkt droht ein Hardware-Reset des Mikrocontrollers sowie der Verlust aller Daten im flüchtigen Speicher (RAM). Nach einem Hardware-Reset muß die Komponente einen sogenannten "Kaltstart" durchführen, bei dem i.a. eine spezielle Initialisierungsroutine durchlaufen werden muß. Solch eine Grundinitialisierung betrifft die Komponente auf der untersten Ebene, z.B. Setzen/Zurücksetzen von µC-Ports usw. Wird in dieser Routine beispielsweise ein Flag im RAM gesetzt, besteht die Möglichkeit, einen Kaltstart (Verlust aller Daten, wenn kein nicht-flüchtiger Speicher zur Verfügung steht) von einem Warmstart (Teilverlust von Daten) zu unterscheiden. Der Begriff Reset ist im folgenden also nicht zwangsläufig mit einem Hardware-Reset des Mikrocontrollers gleichzusetzen.

Der CD-Changer 2 erhält nun bei t₂ ein Watchdog-Telegramm 6 vom Radio 1 und baut daraufhin die Verbindung zum Radio 1 wieder auf.

Bei t₃ quittiert das Radio 1 dem CD-Changer 2 den Verbindungsaufbau. Hiermit verbunden ist eine Reinitialisierung der Kommunikationsverbindung im Radio 1.

Bei t₄ sendet der CD-Changer 2 daraufhin die Infonriationsnachricht, die Start-Up-Info, an das Radio 1. Das Radio 1 verarbeitet diese Informationsnachricht und sendet infolgedessen bei t₅ geeignete Applikationsnachrichten zur Wiederherstellung des alten Zustands vor dem Auftreten der Unterspannung an den CD-Changer 2, beispielsweise die Befehle "Einschalten" und "Play". Somit ist der Zustand wiederhergestellt, in dem das System vor Eintritt der betriebsstörenden Unterspannung war.

Zur Begründung für den hier beschriebenen Ablauf sei bemerkt, daß es im Regelfall nicht sinnvoll ist, daß der Slave versucht, selbständig seinen alten Zustand komplett zu restaurieren. Hintergrund ist, daß auch im Master (oder in einer anderen, hier nicht gezeigten Komponente) ein Fehler aufgetreten sein kann, so daß die verschiedenen Applikationen nicht mehr synchronisiert sind. Beispielsweise würde es keinen Sinn ergeben, wenn der CD-Changer selbständig seinen alten Zustand "PLAY" restaurieren würde, das Radio aber aufgrund eines internen Resets die Audio-Signale des CD-Changers nicht mehr verarbeiten würde.

Der wesentliche Inhalt der Informationsnachricht "Start-up Info" ist der aktuelle Applikationszustand des CD-Changers 2 bzw. des Slaves, soweit er für die Bedienung des CD-Changers 2 aus Sicht des Radios 1 bzw. des Masters von Bedeutung ist. Bedeutsame Applikationshauptzustände aus Sicht dieses Masters sind beispielsweise EIN/AUS, d.h. sie zeigen dem Radio 1 an, ob die Slave-Applikation für den Master verfügbar ist oder nicht.

Es können jedoch auch andere, spezielle Applikationszustände aktiviert gewesen und dementsprechend nun dem Master angezeigt werden, wie beispielsweise die Wiedergabe eines CD-Changers (PLAY) im vorliegenden Ausführungsbeispiel oder etwa ein Diagnose-Modus.

Weitere spezielle Zustände des Slaves können kennzeichnen, daß der Slave nur einen eingeschränkten Funktionsumfang besitzt, da beispielsweise die Applikationssoftware noch von einer CD-ROM geladen werden muß oder weil eine Verriegelung des Slaves seitens anderer logischer Verbindungen besteht, wie oben bereits erwähnt wurde.

Desgleichen können diverse Zustände der Mensch-Maschine-Schnittstelle des Slave, also beispielsweise Menüs oder Fenster auf einem Bildschirm, die aktuelle Belegung von Softkeys im System, dem Master auf eine solche Weise angezeigt werden.

Ein optionaler Bestandteil ist der sogenannte Initialisierungsanstoß. Dies ist ein Bestandteil, der angibt, wer letztlich den Aufbau der Kommunikationsverbindung initiiert hat.

Dieser Anstoß kann sowohl im Master als auch im Slave begründet liegen. Im ersten Fall, der den Normalfall darstellt und dem obigen Beispiel zugrunde liegt, liefert der Master den Initialisierungsanstoß, z.B. durch einen Netzmanagement-Mechanismus in Form eines Watchdog-Telegamms. Ein Beispiel für den zweiten Fall bildet das Wecken durch einen Slave, welches beispielsweise durch die Verbindungsaufbautelegramme des Slaves ausgelöst wird. Aufgrund der übermittelten Information "Initialisierungsanstoß durch Slave" kann der Master im letzteren Fall den unerwarteten Verbindungsaufbau durch den Slave leicht als Wecken interpretieren und von Fehlerfällen unterscheiden.

Ein weiterer optionaler Bestandteil beschreibt die Vorgeschichte der Applikation. In diesem Fall wurde die Sitzung durch einen Fehler beendet, es kam zu einem Reset der Kommunikation sowie der Applikation wegen des Auftretens einer Unterspannung des CD-Changers 2. Daher hat der Bestandteil die Bedeutung "Fehler im Slave" und kann durch ein Flag oder ein anderes Kennzeichen signalisiert werden.

Wenn in einem anderen Fall die Applikation bei der letzten Sitzung, d.h. dem letzten zusammenhängendem Zeitraum mit einer gültigen 1:1-Verbindung zwischen Radio 1 und CD-Changer 2 beispielsweise durch einen Ausschaltbefehl ordnungsgemäß verlassen wurde, könnte der Inhalt des Bestandteils die Bedeutung "o.k." haben.

Befindet sich der CD-Changer 2 zum ersten Mal am Netz, dann könnte der Inhalt des Bestandteils die Bedeutung "NEU" haben. Ein solches Kennzeichen ist wichtig für eine Grundinitialisierung nach einem Austausch, einem Neueinbau oder zur Diagnose nach einem fatalen Fehler.

Bei der Übermittlung der Vorgeschichte ist zu beachten, daß die Start-up-Info ausschließlich die Sicht des Slaves widerspiegelt. Erst ein Vergleich mit den im Master gespeicherten Daten erlaubt eine endgültige Aussage zur Vorgeschichte des Systems.

Generell gilt nun, daß nur in der Komponente, die einen Reset während des Betriebs durchführt, Applikation und Kommunikation gleichermaßen initialisiert werden. In der verbundenen Komponente, hier dem Radio 1 als Master, wird dagegen nur ein Reset der Kommunikation ausgeführt. Der Reset ist nötig, um die 1:1-Kommunikationsverbindung wieder zu synchronisieren. Die Applikation des Masters ist normalerweise nicht unmittelbar vom Reset der anderen Komponente betroffen.

Eine Initialisierung der Kommunikation ist also auch ohne eine Initialisierung der Applikation möglich. Bei einer 1:1-Verbindung erfolgt im Fehlerfall ein Reset der Kommunikationsschichten also auf beiden Seiten, während die Applikation beispielsweise nur auf einer Seite zurückgesetzt wird.

Das Verfahren beruht also auf einer automatischen Meldung des Slaves an den Master, die den aktuellen Zustand der Slave-Komponente sowie deren Vorgeschichte enthält, initiiert durch ein spezielles, eindeutiges Kommunikationserereignis. Dieses kann ausgelöst sein durch das Auftreten der Unterspannung am CD-Changer 2 bzw. durch den Reset des CD-Changers 2.

Aufgrund aller Start-up-Informationen der angeschlossenen Slaves sowie der eigenen, im nichtflüchtigen Speicher 4 des Masters enthaltenen Daten kann der Master 1 nun sehr effizient den alten Applikationszustand nach einem Fehler rekonstruieren.

Meldet eine Komponente abweichend vom Ausführungsbeispiel, daß sie neu im Netz ist, so zeigt ein Vergleich mit den gespeicherten Daten des Masters, ob diese Komponente einen Fehler, beispielsweise eine extreme Unterspannung, einen fatalen Softwarefehler oder dgl. hatte, was beispielsweise wichtig für eine Systemdiagnose wäre, oder ob sie wirklich neu im Netz ist. In diesem Fall könnte ein spezieller Konfigurationslauf erfolgen, der in einem Ausführungsbeispiel weiter unten erläutert wird.

Zusammenfassend ermöglicht das erfindungsgemäße Verfahren gemäß diesem Ausführungsbeispiel also eine ereignisorientierte Merk- oder Speicherfunktion der Komponenten und enthält folgende Mechanismen.

Ein Slave sendet automatisch jedem ihm zugeordneten Master unmittelbar nach dem erfolgreichen (Wieder-)Aufbau der 1:1 Verbindung zum Master als erste Applikationsnachricht eine spezielle Informationsnachricht mit Statusinformationen ("Start-Up-Info") in den folgenden Fällen:
- nach erfolgter eigener Initialisierung bzw. eigenem Reset der Kommunikationsschichten und
- nach erfolgtem Reset der Kommunikationsschichten durch den Master.

Dabei ist zu bedenken, daß grundsätzlich beide - Master oder Slave - unabhängig von ihrer hierarchischen Einbettung in das Gesamtsystem des Netzwerks die gegenseitige Kommunikation beginnen können.

Da die Vorgeschichte anhand der Start-Up Infos der Slaves vom Master abgeleitet werden kann, ergeben sich zusätzliche Möglichkeiten für eine netzweite Diagnose.

Im folgenden zweiten Ausführungsbeispiel sei ein weiteres System angenommen, das aus einer beliebigen Master- und zwei und in einer weiter unten beschriebenen Abwandlung drei beliebigen Slave-Komponenten besteht.

Zunächst befinden sich neben dem Master zwei weitere Komponenten A, C - Slaves des Masters - im Netzwerk. Eine weitere Komponente B ist dem Master zwar bekannt, sie ist jedoch (noch) nicht angeschlossen.

Das erfindungsgemäße Verfahren läßt sich für dieses System auch in Anlehnung an Fig. 2 beschreiben.

Es wird eine in dem nichtflüchtigen Speicher des Masters abgelegte Netzwerkstatustabelle mit Konfigurations-, Verbindungs- und Applikationszuständen der bekannten Slaves exemplarisch gezeigt.

| | | | |
|---|---|---|---|
| Bekannte Slaves | Netzkonfiguration | Verbindungsstatus | Applikationsstatus |
| Komponente A | "vorhanden" | "Verbindung aufgebaut" | "Applikation ein" |
| Komponente B | "nicht verfügbar" | "keine Verbindung" | "nicht verfügbar" |
| Komponente C | "vorhanden" | "Verbindung aufgebaut" | "Applikation aus" |

Die Netzwerkstatustabelle wurde zum Zwecke einer besseren Verständlichkeit so einfach wie möglich gehalten. Normalerweise enthält eine solche Tabelle weitaus mehr Informationen, z. B. Konfigurationsdaten für die einzelnen Verbindungen.

Aus Übersichtsgründen nennt dieses Beispiel nur die Applikationshauptzustände "EIN" und "AUS" bzw. "nicht verfügbar". Neben den Informationen in dieser Netzwerkzustandstabelle speichert der Master auch seine eigene Vorgeschichte.

In einer Abwandlung des letztgenannten Beispiels (Neuanschluß eines Slaves) erhält der Master nach einem Verbindungsaufbau folgende "Start-up Info" von der Komponente B:
B an Master: "B zum ersten Mal im Netz, Applikationszustand ,AUS'".

Der Master kann aufgrund dieser Information einen speziellen Konfigurationslauf starten. Die Netzwerkstatustabelle ändert sich dann wie folgt:

| | | | |
|---|---|---|---|
| Bekannte Slaves | Netzkonfiguration | Verbindungsstatus | Applikationsstatus |
| Komponente A | "vorhanden" | "Verbindung aufgebaut" | "Applikation ein" |
| Komponente B | " vorhanden" | "Verbindung aufgebaut" | "Applikation aus" |
| Komponente C | "vorhanden" | "Verbindung aufgebaut" | "Applikation aus" |

Von diesem Zeitpunkt an ist der Master in der Lage, die Applikation der Komponente B zu starten und alle verfügbaren Funktionen zu steuern.

Im folgenden wird ein beispielhafter Fehlerfall dargestellt.

In einer weiteren Veränderung des letztgenannten Systemzustands erhält der Master nach erneutem Verbindungsaufbau der Komponenten A und C folgende "Start-up Informationen":
A an Master: "A war bereits im Netz, Applikation ,AUS'".
C an Master: "C ist zum ersten Mal im Netz, Applikation ,AUS'".

Nach Vergleich mit den gespeicherten Informationen kann der Master nun unmittelbar den alten Zustand durch gezielte Applikationsnachrichten wieder rekonstruieren (in diesem einfachen Beispiel ist nur eine Nachricht notwendig):
Master an A: "Applikation "EIN'".

Weiterhin kann der Master feststellen, daß Komponente A einen "Warmstart" und Komponente C sogar einen "Kaltstart" durchgeführt hatte, da Komponente C im Netz bereits vorhanden war. Diese Daten können mit speziellen Fehlerzählern verwaltet und über Diagnosesoftware ausgewertet werden.

Obwohl die vorliegende Erfindung vorstehend anhand bevorzugter Ausführungsbeispiele beschrieben wurde, ist sie darauf nicht beschränkt, sondern auf vielfältige Weise modifizierbar.

So kann das erfindungsgemäße Verfahren auch für komplexere Systeme eingesetzt werden, in denen der Master eines oder mehrerer Slaves wiederum der Slave eines Masters auf einer ranghöheren Ebene ist.

Ebenso ist es einsetzbar in Systemen, in denen ein oder mehrere Slaves mehr als nur einem Master zugeordnet sind.

Ebenso kann das erfindungsgemäße Verfahren in Netzwerken mit Client-Server-Architekturen verwendet werden, wobei i.a. der Client eine gewisse Masterfunktionalität übernimmt.

Desweiteren ist es prinzipiell in Überwachungs- und Fehlerdiagnosesystemen in beliebigen technischen, vernetzten Einrichtungen einsetzbar. Insbesondere im KFZ-Bereich ergeben sich dabei vielfältige Anwendungsmöglichkeiten bei der Fehlerüberwachung und Fehlerdiagnose von vernetzten elektronischen Steuergeräten.

Ebenso können die Kommunikationsverbindungen zwischen den Komponenten durch drahtlose Verbindungen realisiert sein.

### BEZUGSZEICHENLISTE

| | |
|---|---|
| 1 | erste, logische Komponente, Master (Radio) |
| 2 | zweite logische Komponente, Slave (CD-Changer) |
| 3 | Kommunikationsverbindung |
| 4 | nichtflüchtiger Speicher |
| 5 | vorzugsweise nichtflüchtiger Speicher |
| 6 | Watchdog-Telegramm |

## Patentansprüche

1. Verfahren zur Koordination von Netzwerkkomponenten (1, 2), wobei mindestens eine erste logische Komponente (1) und eine zweite logische Komponente (2) vorgesehen sind, welche jeweils einer Applikation entsprechen und über das Netzwerk auf einer von der Applikationsebene unabhängigen Kommunikationsebene miteinander kommunizieren können, wobei die erste und die zweite logische Komponente (1, 2) in einer Master-Slave-Beziehung zueinander stehen;
mit den Schritten:
Aufbauen einer Kommunikationsverbindung zwischen der ersten und der zweiten logischen Komponente (1, 2) auf Initiative einer der ersten oder zweiten logischen Komponente (1, 2) ansprechend auf ein Ereignis, welches die erste und/oder zweite logische Komponente (1, 2) betrifft;
Übermitteln einer Informationsnachricht mit zumindest Informationen bezüglich eines aktuellen Applikationsstatus der zweiten logischen Komponente über die aufgebaute Kommunikationsverbindung von der zweiten logischen Komponente (2) an die erste logische Komponente (1),
**dadurch gekennzeichnet, daß**
die Informationen der übermittelten Informationsnachricht in der zweiten logischen Komponente (2) in einem nichtflüchtigen Speicher (5) gespeichert werden und der Inhalt des nichtflüchtigen Speichers (5) der zweiten logischen Komponente (2) jedesmal dann aktualisiert wird, wenn eine Änderung des Applikationsstatus der zweiten logischen Komponente (2) eintritt;
und folgende weitere Schritte ausgeführt werden:
Vergleichen der Informationen der übermittelten Informationsnachricht in der ersten logischen Komponente (1) mit dort in einem nicht-flüchtigen Speicher (4) gespeicherten Informationen über die erste und/oder zweite logische Komponente (2); und
Koordinieren der zweiten logischen Komponente (2) auf der Applikationsebene durch die erste logische Komponente unter Berücksichtigung des Vergleichsergebnisses.

2. Verfahren nach Anspruch 1, **dadurch gekennzeichnet, daß** die Informationen der übermittelten Informationsnachricht in der ersten logischen Komponente (1) in dem nicht-flüchtigen Speicher (4) gespeichert werden.

3. Verfahren nach Anspruch 1 oder 2, **dadurch gekennzeichnet, daß** die Informationsnachricht nach einem Reset bei bereits gestarteter Applikation mindestens einer der ersten oder der zweiten logischen Komponente (1,2) übermittelt wird.

4. Verfahren nach Anspruch 1, 2 oder 3, **dadurch gekennzeichnet, daß** die erste logische Komponente (1) die Informationen der übermittelten Informationsnachricht zur Rekonstruktion des Zustands vor dem Aufbauen der Kommunikationsverbindung durch die erste logische Komponente (1) verwendet.

5. Verfahren nach einem der vorhergehenden Ansprüche, **dadurch gekennzeichnet, daß** das Koordinieren in einem Wiederaufsetzen oder einem Konfigurieren auf der Applikationsebene besteht.

## Claims

1. Method for co-ordinating network components (1, 2), at least one first logical component (1) and a second logical component (2) being provided, which in each case correspond to an application and can communicate with one another via the network at a communication level independent of the application level, the first and second logical components (1, 2) being in a master-slave relationship with one another; having the following steps:
set-up of a communication link between the first and second logical components (1, 2) on the initiative of either the first or second logical component (1, 2) in response to an event which concerns the first and/or second logical component (1, 2);
communication of an information message having at least information items with regard to a present application status of the second logical component via the set-up communication link from the second logical component (2) to the first logical component (1),
**characterized in that**
the information items of the communicated information message are stored in a non-volatile memory (5) in the second logical component (2) and the content of the non-volatile memory (5) of the second logical component (2) is updated whenever a change in the application status of the second logical component (2) occurs; and the following further steps are executed:
comparison of the information items of the communicated information message in the first logical component (1) with information items - stored there in a non-volatile memory (4) - about the first and/or second logical component (2); and
co-ordination of the second logical component (2) at the application level by the first logical component with the comparison result being taken into account.

2. Method according to Claim 1, **characterized in that** the information items of the communicated information message are stored in the non-volatile memory (4) in the first logical component (1).

3. Method according to Claim 1 or 2, **characterized in that** the information message is communicated after a reset with already started application of at least one of the first or the second logical components (1, 2).

4. Method according to Claim 1, 2 or 3, **characterized in that** the first logical component (1) uses the information items of the communicated information message for the reconstruction of the state prior to the set-up of the communication link by the first logical component (1).

5. Method according to one of the preceding claims, **characterized in that** the co-ordination consists in a restoration or a configuration at the application level.

## Revendications

1. Procédé de coordination de composants d'un réseau (1, 2) avec au moins un premier composant logique (1) et un second composant logique (2) qui correspondent à une application et peuvent communiquer l'un avec l'autre par le réseau dans un plan de communication indépendant du plan d'application, le premier et le second composant logique (1, 2) étant liés par une relation maître/esclave, procédé comprenant les étapes suivantes :
- on établit une liaison de communication entre le premier et le second composant logique (1, 2) à l'initiative de l'un des deux composants logiques (1, 2) en fonction d'un événement concernant le premier et/ou le second composant logique (1, 2),
- on transmet au moins une nouvelle avec des informations concernant un état d'application actuel du second composant logique par la liaison de communication établie, du second composant logique (2) vers le premier composant logique (1),
**caractérisé en ce que**
les informations concernant la nouvelle transmise sont enregistrées dans le second composant logique (2), dans une mémoire non volatile (5) et le contenu de cette mémoire (5) du second composant logique (2) est actualisé chaque fois lorsqu'une modification de l'état d'application arrive dans le second composant logique (2),
et on effectue les étapes suivantes :
- on compare les informations de la nouvelle transmise dans le premier composant logique (1) avec les informations enregistrées dans celui-ci dans une mémoire non volatile (4) concernant le premier et/ou le second composant logique (2), et
- on assure la coordination du second composant logique (2) dans le plan d'application par le premier composant logique en tenant compte du résultat de la comparaison.

2. Procédé selon la revendication 1,
**caractérisé en ce que**
l'on enregistre les informations relatives aux nouvelles transmises dans le premier composant logique (1), dans sa mémoire non volatile (4).

3. Procédé selon les revendications 1 ou 2,
**caractérisé en ce que**
l'on transmet la nouvelle d'informations après une remise à l'état initial dans le cas d'une application déjà démarrée d'au moins un premier ou d'un second composant logique (1, 2).

4. Procédé selon les revendications 1, 2, 3,
**caractérisé en ce que**
le premier composant logique (1) utilise des informations relatives à la nouvelle transmise pour reconstruire l'état avant l'établissement de la liaison de communication par le premier composant logique (1).

5. Procédé selon l'une des revendications précédentes,
**caractérisé en ce que**
la coordination consiste à un rétablissement ou à une configuration dans le plan d'application.
